# EUROPÄISCHE PATENTANMELDUNG

(11) **EP 2 060 826 A2**
(43) Veröffentlichungstag der Anmeldung: **20.05.2009**
(21) Anmeldenummer: 08019903.7
(22) Anmeldetag: 14.11.2008
(51) Int. Cl.: F16G 11/04

(54) **Vorrichtung zur Verbindung des Endes einer Schnur mit wenigstens einem weiteren Element**

(30) Priorität: 16.11.2007 DE 102007056351
(71) Anmelder: KKV Marken- und Patentschutz GbR, 42699 Solingen (DE)
(72) Erfinder: Risse, Michael, 85774 Unterföhring (DE)
(74) Vertreter: Patentanwälte Buse, Mentzel, Ludewig

(57) **Zusammenfassung**

Die vorliegende Erfindung betrifft eine Vorrichtung (10) zur Verbindung eines Endes (21) einer Schnur (20) mit wenigstens einem weiteren Element (30). Die Vorrichtung (10) umfasst ein Gehäuse (11) mit einer ersten Aufnahme (12), in welche das Schnurende (21) aufnehmbar ist, um einen Einbauzustand zu erreichen, der die Verbindung ermöglicht, wobei das oder die weiteren Elemente (30) über ein oder mehrere Verbindungsmittel (32) mit dem Gehäuse (11) verbindbar sind. Im Bereich der ersten Aufnahme (12) sind ein oder mehrere Vorsprünge (13) vorgesehen, wobei das Schnurende (21) im Einbauzustand unmittelbar form- oder kraftschlüssig mit dem bzw. den Vorsprüngen (13) in Wirkverbindung tritt (Fig. 1).

## Beschreibung

Die Erfindung betrifft eine Vorrichtung der im Oberbegriff des Anspruches 1 angegebenen Art. Solche Vorrichtungen werden verwendet, um Enden von Schnüren, wie Kordeln, Litzen, Bändern und Ähnlichem, die elastisch oder unelastisch sein können, mit einem weiteren Element zu verbinden. Solche Schnüre finden vielerorts Anwendung, insbesondere auch im Automobil- und Luftfahrtbereich.

Eine Anforderung aus diesen Bereichen ist es, dass die Montage der Kordel in Kombination mit dem Kordelverbinder möglichst einfach und schnell und damit kostengünstig abläuft. Auch sind in diesen Bereichen häufig hohe Anforderungen an die Platzersparnis zu erfüllen. Ein dritter Aspekt ist, dass der Verbinder im montierten Zustand ein ansprechendes, gleichmäßiges Äußeres aufweist.

Bisher wurde zur Aufnahme eines Schnurendes in einer Verbindungsvorrichtung das Schnurende mit einem Widerstandselement, wie einer kleinen Kugel, verbunden. Diese Kugel wurde an das Schnurende gecrimpt oder geklebt. Häufig wurde auch zunächst ein Knoten in die Schnur gemacht, um dann das Widerstandselement einfacher mit dem Schnurende zu verbinden. Anschließend wurde das Schnurende mit dem Widerstandselement in die Verbindungsvorrichtung eingeführt und dort gehaltert, und zwar insbesondere durch eine formschlüssige Verbindung des Widerstandselementes und der dazugehörigen Aufnahme in dem Verbindungsstück. Die Montage einer solchen Vorrichtung ist vergleichsweise kompliziert und teuer und es wird das Widerstandselement noch als zusätzliches Bauteil benötigt. Dadurch, dass die Verbindungsvorrichtung groß genug sein muss, um das Widerstandselement aufzunehmen, muss sie insgesamt relativ groß dimensioniert werden, was technisch und optisch nicht optimal ist.

Der Erfindung liegt die Aufgabe zugrunde eine Vorrichtung zu schaffen, die es ermöglicht, dass ein Kordelende mit einem weiteren Element verbunden werden kann, wobei die Montage der Vorrichtung schnell und einfach erfolgen soll, die Kordel an der Vorrichtung sicher gehaltert wird und die Vorrichtung kompakt und platzsparend ausgeführt ist und ein ansprechendes, optisches Äußeres aufweist. Diese Aufgabe wird erfindungsgemäß durch die kennzeichnenden Merkmale des Anspruches 1 gelöst, denen folgende besondere Bedeutung zukommt.

Im Bereich der ersten Aufnahme in der Vorrichtung sind ein oder mehrere Vorsprünge vorgesehen, mit welchen das Schnurende im Einbauzustand unmittelbar form- und kraftschlüssig in Wirkverbindung stehen kann. Hierdurch wird die Montage der Verbindungsvorrichtung erheblich vereinfacht und die Montagezeiten werden verkürzt, was zu einer deutlichen Kostenersparnis führt. Außerdem wird noch ein Bauteil eingespart, was die Kosten für die Bevorratung und Lagerhaltung zusätzlich verringert. Die Verbindungsvorrichtung kann auch deutlich kleiner und kompakter ausgeführt werden, was zu einer besseren Optik führt.

In einer bevorzugten Ausführungsform ist die Vorrichtung dazu ausgebildet, zwei Schnurenden miteinander zu verbinden. Diese Schnurenden können zu der selben Schnur gehören, so dass bei der Verbindung die Schnur mit der Vorrichtung einen geschlossenen Ring bildet. Selbstverständlich ist es auch möglich, dass die Vorrichtung eine Mehrzahl von Aufnahmen aufweist, in welche eine Mehrzahl von Schnurenden eingebracht werden können. Besonders einfach ist es, hierbei die Aufnahmen alle baugleich auszuführen. Insbesondere sind hierbei Ausführungen in Form von T-Stücken, Y-Stücken, Winkelstücken oder Kreuzungsstücken vorgesehen. Wie viele Aufnahmen für Schnurenden vorgesehen sind, hängt dann vom jeweiligen Anwendungsfall ab.

Die Schnur kann beispielsweise in Form einer Kordel, einer Litze oder eines Bandes vorliegen. Auch kann die Schnur elastisch oder unelastisch ausgestaltet sein. Bei einer elastischen Ausgestaltung ist es sowohl möglich als Material zumindest teilweise elastisches Material zu verwenden oder auch komplett unelastisches Material, was nur auf eine solche Art verarbeitet wird, dass die fertige Schnur elastisch ist.

Neben einer weiteren Aufnahme kann als Verbindungsmittel beispielsweise auch ein Haken oder eine Öse vorgesehen sein, oder auch ein Rastelement, welches dann mit dem weiteren Element eine Rastverbindung eingehen kann. Als weitere Elemente kommen häufig Drahtbügel oder Kunststoffrahmen zur Anwendung. Die Form des Verbindungsmittels hängt einzig und allein von der Art des weiteren Elementes ab. Das Verbindungsmittel muss so gewählt werden, dass eine Verbindung der Schnur mit dem weiteren Element möglich ist. Ein typisches Beispiel für einen Anwendungsfall sind Taschen in der Rückenlehne von Sitzen in Fahr- oder Flugzeugen. Am oberen Rand werden diese zumeist durch eine elastische Kordel beschränkt, welche dann mit dem Rahmen der Tasche in Verbindung zu bringen ist, erfindungsgemäß mit der beschriebenen Vorrichtung und einem Haken, einer Öse oder einem Rastelement als weiterem Element.

Die Vorrichtung selber kann beispielsweise aus Kunststoff oder aus Metall bestehen. Es ist jedoch auch möglich, die Vorrichtung bereichsweise aus Kunststoff und bereichsweise aus Metall herzustellen. Auch eine Herstellung aus mehreren Kunststoffen als Zwei- oder Mehrkomponenten-Bauteil ist grundsätzlich denkbar.

Weitere Vorteile und Ausführungsformen der Erfindung ergeben sich aus der nachfolgenden Beschreibung, den Unteransprüchen und den Zeichnungen. Es zeigen:
- Fig. 1: einen Gehäuseteil einer ersten erfindungsgemäßen Vorrichtung,
- Fig. 2: den Gehäuseteil aus Fig. 1 mit eingelegtem Schnurende,
- Fig. 3: die vollständige Vorrichtung aus Fig. 1 und 2 kurz vor dem Zusammenbau,
- Fig. 4: eine weitere Ausführungsform einer erfindungsgemäßen Vorrichtung mit zweiteiligem Gehäuse und
- Fig. 5: eine dritte Ausführungsform einer erfindungsgemäßen Vorrichtung im Schnitt.

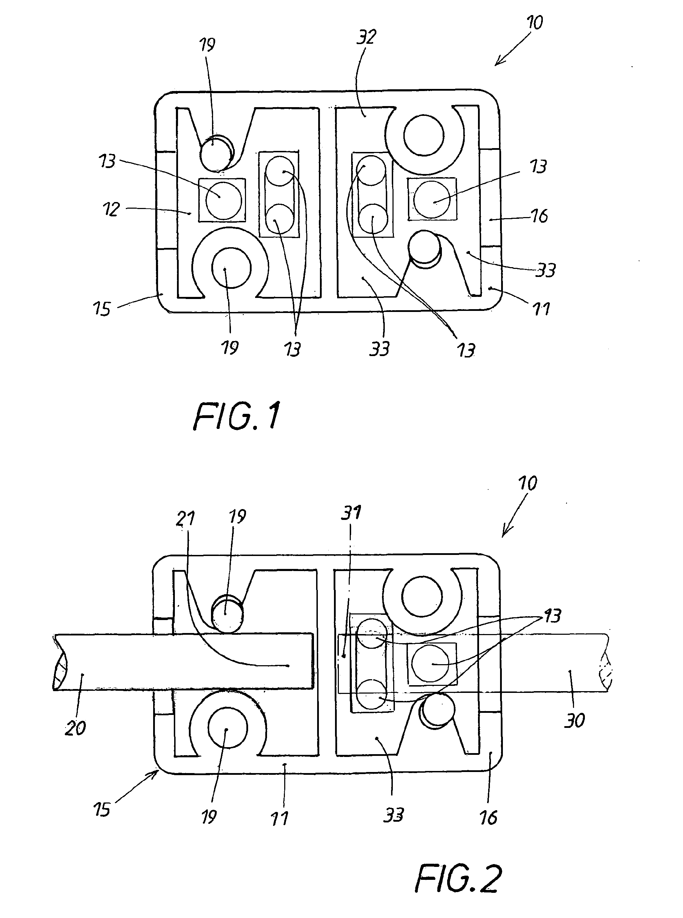

Fig. 1 zeigt einen Teil einer ersten Ausführungsform der erfindungsgemäßen Vorrichtung 10. Die Vorrichtung 10 verfügt über ein zweiteiliges Gehäuse 11, von welchem hier nur der erste Teil 16 dargestellt ist. Man erkennt eine erste Aufnahme 12, sowie eine weitere Aufnahme 33, welche hier als Verbindungsmittel 32 für das weitere Element 30, in diesem Fall ein zweites Schnurende 31, zeigt. Man erkennt deutlich mehrere Vorsprünge 13 in jeder Aufnahme 12, 33. Diese dienen dem Kraft- und Formschluss der Schnurenden 21, 31.

Auch erkennbar sind hier die Elemente 19, die beim Zusammenbau miteinander eine Steckverbindung bilden, wobei bei diesem Zusammenbau auch der direkte Kraft- und Formschluss zwischen den Schnurenden 21, 31 und den Vorsprüngen 13 gebildet wird. Selbstverständlich ist es auch möglich, die Gehäuseteile 16, 17 miteinander zu verclipsen oder auf sonstige Weise zu fixieren.

Die Vorsprünge 13 werden hier durch mehrere Dorne gebildet. Auch hier ist es selbstverständlich möglich, eine andere Art von Vorsprüngen 13 vorzusehen.

Fig. 2 zeigt wiederum den ersten Teil 16 des Gehäuses 11. Die Schnur 20 ist bereits in den ersten Gehäuseteil 16 im Bereich der ersten Aufnahme 12 mit ihrem Schnurende 21 eingeführt. Auf der anderen Seite, im Bereich der weiteren Aufnahme 33, ist bereits gestrichelt die Lage des zweiten Schnurendes 31 angedeutet dargestellt, wobei dieses zweite Schnurende 31 zum weiteren Element 30, nämlich einer zweiten Schnur, gehört.

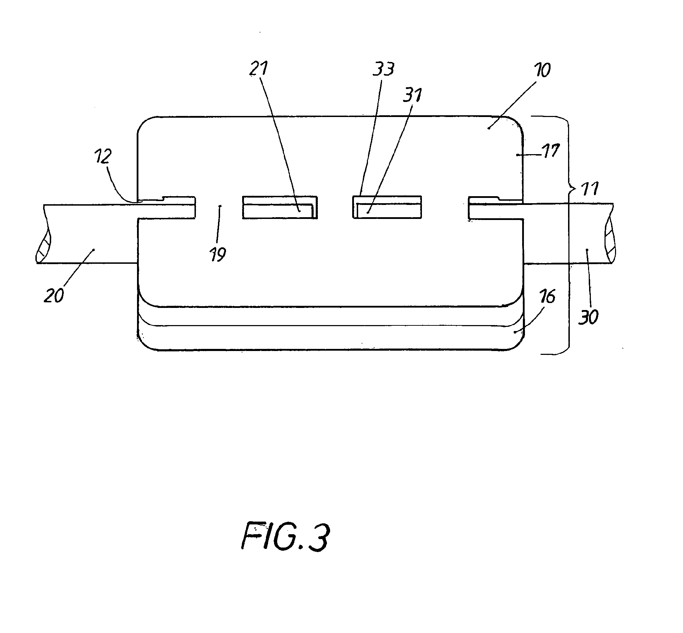

Fig. 3 wiederum zeigt die erfindungsgemäße Vorrichtung 10 mit den beiden Teilen 16, 17 des Gehäuses 11 kurz vor dem Zusammenbau. Man erkennt hier die Schnur 20 sowie das weitere Element 30. Die Schnurenden 21, 31 sind in die Aufnahmen 12, 33 eingeführt. Die Steckelemente 19 sind vorbereitet, aber noch nicht zusammengesteckt. Um die Montage abzuschließen, müssen die beiden Gehäuseteile 16, 17 nur noch aufeinander zu bewegt werden, um die Steckverbindung fertig zu stellen.

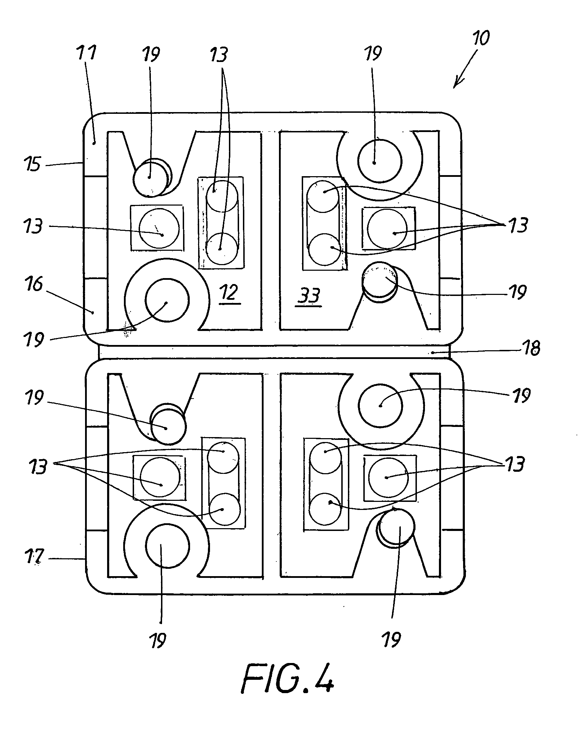

Fig. 4 zeigt ein zweites Ausführungsbeispiel der erfindungsgemäßen Vorrichtung. Auch hier besteht das Gehäuse 11 aus zwei Teilen 16, 17. In den Teilen 16, 17 sind zwei Aufnahmen 12 und 33 für zwei Schnurenden 21, 31 vorgesehen. Beide Gehäuseteile 16, 17 sind mit einem Filmscharnier 18 miteinander verbunden. Hierdurch wird die Montage weiter vereinfacht, da das Gehäuse 11 bereits in Form miteinander fest verbundener Gehäuseteile 16, 17 vorliegt.

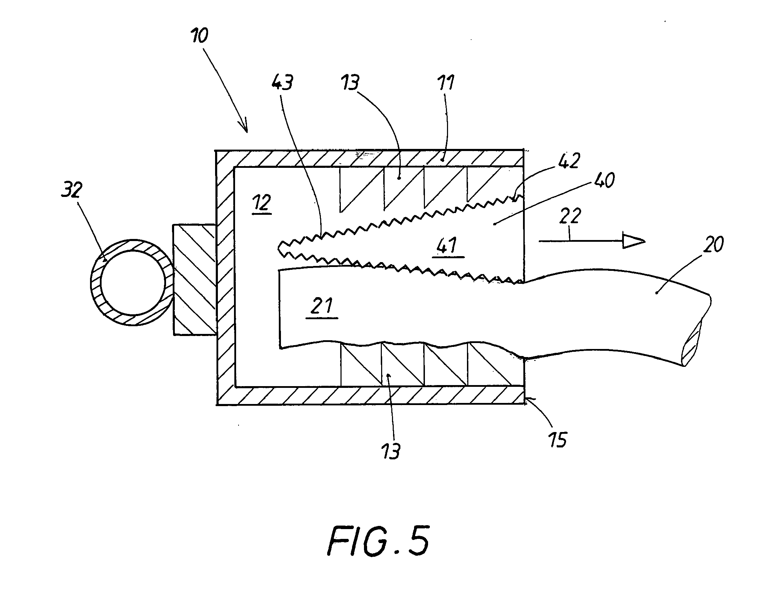

Eine ganz andere, jedoch auch vorteilhafte Ausführungsform der Erfindung zeigt das Ausführungsbeispiel in Fig. 5. Das Gehäuse 11 der Vorrichtung 10 ist hier einstückig ausgeführt. Das Ende 21 der Schnur 20 wird vom einen Ende 15 des Gehäuses 11 aus in die Aufnahme 12 eingeführt. Damit das Schnurende 21 mit den Vorsprüngen 13 einen Kraft- und Formschluss eingeht, wird ein Fixierungsteil 40 vorgesehen, welcher hier ebenfalls in die Aufnahme 12 des Gehäuses 11 eingebracht wird. Der Fixierungsteil 40 ist hier in Form eines Konus 41 ausgebildet. Die Oberfläche 43 des Konus 41 weist Mittel 42 auf, die zusätzlich ein Herausgleiten des Konus 41 verhindern. Im vorliegenden Beispiel sind die Mittel in Form eines Außengewindes an der Oberfläche 43 des Konus ausgeführt. Es ist auch möglich, den Konus 41 ohne die Mittel 42 auszubilden.

Die Vorsprünge 13 sind als Gewinde ausgeführt. In einem solchen Fall ist es nicht notwendig, dass das Gewinde als komplettes Innengewinde in der Aufnahme 12 vorliegt. Vielmehr ist es auch vorteilhaft, das Gewinde nur in einem Teilbereich der Aufnahme 12 vorzusehen, beispielsweise in einem Winkelbereich von 60° bis 90°. Hierdurch verringert sich die Bauhöhe der Vorrichtung 10. Selbstverständlich ist es auch möglich, die Vorsprünge 13 anders auszubilden.

Weiterhin ist es auch möglich, den Fixierungsteil 40 so auszuführen, dass bei einer gewissen Zugkraft 22 der Fixierungsteil 40 und somit auch das Schnurende 21 aus der Aufnahme 12 des Gehäuses 11 herausgleiten, um eine Überlast zu verhindern.

Als Verbindungsmittel 32 dient im vorliegenden Falle eine Öse. Selbstverständlich ist es möglich, hier auch andere Verbindungsmittel 32 vorzusehen. Auch ist es denkbar, in dieses einstückige Gehäuse 11 eine weitere Aufnahme 33 einzubauen, welche wiederum Vorsprünge 13 aufweist und zur Montage eines zweien Schnurendes 31 dient, beispielsweise mittels eines zweiten Fixierungsteils 40. Es ist jedoch auch möglich, einen Fixierungsteil 40 für beide Aufnahmen 12, 33 vorzusehen.

Abschließend sei noch bemerkt, dass die hier dargestellten Beispiele und Ausführungsformen nur exemplarische Ausführungen der Erfindung sind. Diese ist nicht darauf beschränkt. Es sind vielmehr noch unterschiedlichste Abwandlungen möglich.

### Bezugszeichenliste:

- 10: Vorrichtung
- 11: Gehäuse
- 12: Erste Aufnahme
- 13: Vorsprung
- 15: Ende von 11
- 16: Erster Teil von 11
- 17: Zweiter Teil von 11
- 18: Filmscharnier
- 19: Steckelemente an 16, 17
- 20: Schnur
- 21: Erstes Schnurende
- 22: Richtung der Zugkraft
- 30: Weiteres Element
- 31: Zweites Schnurende
- 32: Verbindungsmittel
- 33: Weitere Aufnahme in 11
- 40: Fixierungsteil
- 41: Konus
- 42: Mittel
- 43: Oberfläche von 40

## Patentansprüche

1. Vorrichtung zur Verbindung eines Endes einer Schnur (20) (Schnurende 21) mit wenigstens einem weiteren Element (30),
wobei die Vorrichtung (10) ein Gehäuse (11) umfasst, welches eine erste Aufnahme (12) aufweist, in welche das Schnurende (21) aufnehmbar ist um einen Einbauzustand zu erreichen, der die Verbindung ermöglicht
und wobei das bzw. die weiteren Elemente (30) über ein bzw. mehrere Verbindungsmittel (32) mit dem Gehäuse (11) verbindbar sind,
**dadurch gekennzeichnet,**
**dass** im Bereich der ersten Aufnahme (12) ein oder mehrere Vorsprünge (13) vorgesehen sind
und **dass** das Schnurende (21) im Einbauzustand unmittelbar form- und kraftschlüssig mit dem bzw. den Vorsprüngen (13) in Wirkverbindung steht.

2. Vorrichtung nach Anspruch 1, **dadurch gekennzeichnet, dass** das Gehäuse (11) einstückig ausgeführt ist und das Schnurende (21) an einem Ende (15) des Gehäuses (11) in die erste Aufnahme (12) einführbar ist,
wobei das Schnurende (21) nach dem Einführen mit einem Fixierungsteil (40) im Gehäuse (11) gehaltert wird.

3. Vorrichtung nach Anspruch 2, **dadurch gekennzeichnet, dass** als Fixierungsteil (40) ein Konus (41) dient, der zumindest bereichsweise in die Aufnahme (12) des Gehäuses (11) einführbar ist um so das Schnurende (21) in seinem Einbauzustand zu fixieren.

4. Vorrichtung nach einem der Ansprüche 2 oder 3, **dadurch gekennzeichnet, dass** der Fixierungsteil (40) an seiner Oberfläche (43) zumindest bereichsweise Mittel (42) umfasst, welche den Kraft- und Formschluss des Fixierungsteils (40) im Gehäuse (11) erhöhen.

5. Vorrichtung nach einem der Ansprüche 2 bis 4, **dadurch gekennzeichnet, dass** der Fixierungsteil (40) bei einer bestimmten Zugkraft (22), welche an der Schnur (20) angreift, außer Eingriff mit dem Schnurende (21) gebracht wird und so das Herausgleiten des Schnurendes (21) aus der Aufnahme (12) ermöglicht.

6. Vorrichtung nach Anspruch 1, **dadurch gekennzeichnet, dass** das Gehäuse (11) mehrteilig (16, 17) ausgeführt ist und nach Einbringen des Schnurendes (21) die Gehäuseteile (16, 17) miteinander fixiert werden um so den Einbauzustand herbeizuführen, insbesondere dass die Gehäuseteile (16, 17) über ein Filmscharnier (18) und/oder über eine Steckverbindung (19) und/oder verclipsbar miteinander verbindbar sind.

7. Vorrichtung nach einem der Ansprüche 1 bis 6, **dadurch gekennzeichnet, dass** als weiteres Element (30) bzw. weitere Elemente (30) weitere Schnurenden (31) dienen, wobei als Verbindungsmittel (32) die Vorrichtung (10) eine oder mehrere weitere Aufnahmen (33) aufweist in welche die weiteren Schnurenden (31) aufnehmbar sind und welche baugleich zur ersten Aufnahme (12) ausgebildet sind.

8. Vorrichtung nach Anspruch 7, **dadurch gekennzeichnet, dass** die Vorrichtung (10) als T-Stück, Y-Stück, Winkelstück oder Kreuzungsstück ausgebildet ist.

9. Vorrichtung nach Anspruch 7, **dadurch gekennzeichnet, dass** die Vorrichtung (10) zur Aufnahme zweier Schnurenden (21, 31) ausgebildet ist
und dass beide Schnurenden (21, 31) zu derselben Schnur (20) gehören, die somit einen geschlossenen Ring bildet.

10. Vorrichtung nach einem der Ansprüche 1 bis 9, **dadurch gekennzeichnet, dass** als Verbindungsmittel (32) eine Öse und/oder ein Haken vorgesehen ist und/oder dass als Verbindungsmittel (32) ein Rastelement dient, welches mit dem weiteren Element (30) eine Rastverbindung eingehen kann.

11. Vorrichtung nach einem der Ansprüche 1 bis 10, **dadurch gekennzeichnet, dass** als weiteres Element (30) ein Drahtbügel und/oder ein Kunststoffrahmen dient.

12. Vorrichtung nach einem der vorhergehenden Ansprüche, **dadurch gekennzeichnet, dass** die Schnur (20) elastisch ist, insbesondere dass die Schnur (20) zumindest teilweise aus elastischem Material besteht.

13. Vorrichtung nach einem der Ansprüche 1 bis 12, **dadurch gekennzeichnet, dass** die Schnur (20) eine Kordel oder eine Litze oder ein Band ist.

14. Vorrichtung nach einem der Ansprüche 1 bis 13, **dadurch gekennzeichnet, dass** der bzw. die Vorsprünge (13) in Form eines Gewindes ausgestaltet sind.

15. Vorrichtung nach einem der Ansprüche 1 bis 14, **dadurch gekennzeichnet, dass** die Vorrichtung (10) aus Kunststoff und/oder aus Metall besteht.
